# EUROPÄISCHE PATENTANMELDUNG

(11) **EP 2 676 936 A2**
(43) Veröffentlichungstag der Anmeldung: **25.12.2013**
(21) Anmeldenummer: 13003165.1
(22) Anmeldetag: 21.06.2013
(51) Int. Cl.: C02F 3/30, C02F 3/00

(54) **Verfahren zum Betreiben einer Denitrifikationsanlage und Denitrifikationsanlage**

(30) Priorität: 22.06.2012 DE 102012012258
(71) Anmelder: ERWIN SANDER ELEKTROAPPARATEBAU GMBH, 31311 Uetze-Eltze (DE)
(72) Erfinder: Wecker, Bert, 66111 Saarbrücken (DE); Sander, Martin, 31311 Uetze-Eltze (DE)
(74) Vertreter: Friedrich, Andreas

(57) **Zusammenfassung**

Die Erfindung betrifft ein Verfahren zum Betreiben einer Denitrifikationsanlage, in der oxidierte Stickstoffverbindungen in Anwesenheit von Mikroorganismen reduziert werden und die
- einen Reaktionsbehälter (2),
- eine Prozesswasserzuleitung (4) zum Leiten von Prozesswasser, das oxidierten Stickstoff enthält, in den Reaktionsbehälter (2),und
- eine Elektronendonatorzuleitung (6) zum Leiten eines Elektronendonators in den Reaktionsbehälter (2) aufweist,

wobei ein Redox-Messwert des in dem Reaktionsbehälter (2) herrschenden Redoxpotentials und ein pH-Messwert des in dem Reaktionsbehälter (2) herrschenden pH-Wertes bestimmt werden und ein Volumenstrom von Prozesswasser und/oder ein Volumenstrom von Elektronendonator, die in den Reaktionsbehälter (2) eingeleitet werden, in Abhängigkeit des Redox-Messwertes und des pH-Messwertes gesteuert werden.

## Beschreibung

Die Erfindung betrifft ein Verfahren zum Betreiben einer Denitrifikationsanlage, in der oxidierte Stickstoffverbindungen in Anwesenheit von Mikroorganismen reduziert werden. Die Erfindung betrifft zudem eine derartige Denitrifikationsanlage.

Denitrifikationsanlagen werden heute in vielen technischen Anwendungsgebieten, insbesondere bei der Abwassereinigung, beispielsweise in Fischzuchtanlagen eingesetzt. Dabei werden die unterschiedlichen Oxidationsstufen des Stickstoffs in einer gegebenenfalls mehrstufigen Reaktion zu molekularem Stickstoff und Wasser umgesetzt. Dazu werden Wasserstoffionen und Elektronen zugesetzt. Die Denitrifikation erfolgt durch biologische Mikroorganismen, die im Reaktionsbehälter vorhanden sind.

Zur Steuerung einer derartigen Denitrifikationsanlage, insbesondere des Volumenstroms des zugeführten Prozesswasser und des Elektronendonators, ist es aus dem Stand der Technik bekannt, beispielsweise die Konzentration des Nitratstickstoffs und gegebenenfalls auch die des Nitritstickstoffs und des im System vorhandenen Sauerstoffs online bzw. manuell zu messen. Mit den so gewonnenen Werten lässt sich die Stickstofffracht, die im Prozesswasser vorhanden ist, sehr genau feststellen, so dass auch der Volumenstrom des Elektronendonators stöchiometrisch sehr genau berechnet und eingestellt werden kann. Ein derartiges Verfahren erlaubt folglich eine sehr genaue Einstellung der einzelnen zugeführten Volumenströme des Prozesswassers und des Elektronendonators, hängt jedoch von der Genauigkeit der gemessenen Parameter ab. Nachteilig ist, dass die photometrische oder ionenselektive Onlinemessung von Nitrat und damit die Bestimmung der tatsächlichen Stickstofffracht im Prozesswasser sehr aufwändig und damit nur für große Systeme relevant und wirtschaftlich einsetzbar sind. Zudem eignen sich derartige Systeme zumeist nur für Süßwassersysteme, da die empfindlichen Messgeräte für Salzwassersysteme aufgrund dessen hoher Korrosivität und der hohen Konzentration störender Ionen nicht geeignet sind. Die manuelle Messung des Nitratstickstoffs hingegen ist zeitaufwändig und daher kostenintensiv und somit ebenfalls für kleine Systeme nicht wirtschaftlich sinnvoll durchführbar. Zudem ist die Einstellung eines definierten Volumenstroms in biologisch aktiven Systemen sehr wartungsaufwändig und störempfindlich.

Bei einem alternativen Steuerverfahren wird lediglich die Zugabe des Elektronendonators in den Reaktionsbehälter gesteuert. Dazu wird das Redoxpotential, das im Reaktionsbehälter herrscht, gemessen und der zugegebene Volumenstrom des Elektronendonators allein in Abhängigkeit dieses Messwertes gesteuert. Ein derartiger Aufbau ist da nur das Redoxpotential gemessen werden muss insbesondere konstruktiv einfach und kostengünstig. Nachteilig ist jedoch, dass sich herausgestellt hat, dass es trotz der Überwachung des Redoxpotentials zu Fehldosierungen des Elektronendonators kommen kann, die im Extremfall bis zum vollständigen Absterben der denitrifizierenden Mikroorganismen führen kann. Zudem hat sich gezeigt, dass bei einer derartigen Steuerung in erheblichem Maße Schadstoffe, wie beispielsweise Nitrit oder Schwefelwasserstoff in den nachgeschalteten Prozess gelangen, was insbesondere bei der Speisefischproduktion in Fischzuchtanlagen nachteilig ist.

Der vorliegenden Erfindung liegt folglich die Aufgabe zugrunde, ein Verfahren zum Betreiben einer Denitrifikationsanlage anzugeben, das einfach, schnell und kostengünstig handhabbar ist und dennoch gewährleistet, dass Fehldosierungen vermieden und die Schadstoffkonzentration in nachfolgenden Prozessen deutlich verringert wird.

Die Erfindung löst die gestellte Aufgabe durch ein Verfahren zum Betreiben einer Denitrifikationsanlage, in der oxidierte Stickstoffverbindungen in Anwesenheit von Mikroorganismen reduziert werden und die einen Reaktionsbehälter, eine Prozesswasserzuleitung zum Leiten von Prozesswasser, das oxidierten Stickstoff enthält, in den Reaktionsbehälter, und eine Elektronendonatorzuleitung zum Leiten eines Elektronendonators in den Reaktionsbehälter aufweist, wobei bei dem erfindungsgemäßen Verfahren ein Redox-Messwert des in dem Reaktionsbehälter herrschenden Redoxpotentials und ein pH-Messwert des in dem Reaktionsbehälter herrschenden pH-Wertes bestimmt werden und ein Volumenstrom von Prozesswasser und/oder ein Volumenstrom von Elektronendonator, die in den Reaktionsbehälter eingeleitet werden, in Abhängigkeit des Redox-Messwertes und des pH-Messwertes gesteuert werden.

Wie aus dem Stand der Technik bekannt, wird als ein Steuerparameter das Redoxpotential im Reaktionsbehälter bestimmt. Dabei muss die eigentliche Bestimmung durch beispielsweise einen Sensor oder eine andere Messanordnung nicht innerhalb des Reaktionsbehälters erfolgen, sondern kann durchaus in einer separaten Leitung stattfinden. Wichtig ist lediglich, dass durch die Bestimmung des Redox-Messwertes ein Maß für das im Reaktionsbehälter herrschende Redoxpotential ermittelt wird. Der Erfindung liegt die Erkenntnis zugrunde, dass der so ermittelte Redox-Messwert zwar auf Fehldosierungen des Volumenstroms des Prozesswassers und/oder des Volumenstroms des Elektronendonators reagiert, dies jedoch erst, nachdem die Mikroorganismen bereits erheblichen, teilweise irreparablen Schaden erlitten haben. Insbesondere für diese Fälle wird zusätzlich zum Redox-Messwert der pH-Messwert bestimmt, um auch den pH-Wert, der im Reaktionsbehälter herrscht, zur Steuerung der Anlage heranziehen zu können.

Vorzugsweise wird der Volumenstrom des Prozesswassers vermindert, wenn der Redox-Messwert einen vorbestimmten Redox-Maximalwert überschreitet.

In einer optimal eingestellten Denitrifikationsanlage reicht die Aktivität der Mikroorganismen genau aus, um die durch das Prozesswasser in den Reaktionsbehälter eingebrachte Stickstofffracht vollständig zu reduzieren. Optimalerweise ist der Volumenstrom des eingeleiteten Elektronendonators ebenfalls für diese Stickstofffracht genau ausreichend. In diesem Fall sind sowohl das Redoxpotential als auch der pH-Wert zeitlich konstant. Eine Änderung des Volumenstroms des Prozesswassers und/oder der Menge des Elektronendonators ist nicht notwendig.

Für den Fall, dass der dosierte Volumenstrom des Elektronendonators jedoch nicht ausreicht, um die mit dem Prozesswasser eingebrachte Stickstofffracht zu reduzieren, können die Mikroorganismen nicht die gesamte Stickstofffracht verarbeiten, so dass als Reaktion darauf das Redoxpotential ansteigt. Daher wird beim Erreichen eines vorbestimmten Redox-Maximalwertes der Volumenstrom des Prozesswassers und damit die Menge der eingebrachten oxidierten Stickstoffverbindungen, reduziert, bis die Nitratfracht dem Volumenstrom des eingebrachten Elektonendonators und/oder der Aktivität der Denitrifikanten entspricht.

In einer besonders einfachen Ausgestaltung einer Denitrifikationsanlage wird zum Vermindern des Volumenstroms des Prozesswassers die Prozesswasserzuleitung geschlossen. Es wird in diesem Fall keine neue Stickstofffracht in den Reaktionsbehälter eingebracht. Daraufhin wird durch die Mikroorganismen der vorhandene oxidierte Stickstoff reduziert, so dass das Redoxpotential innerhalb des Reaktionsbehälters sinkt. Sobald das Redoxpotential, das weiterhin überwacht und gemessen wird, einen weiteren vorbestimmten Grenzwert wieder unterschreitet, kann der Volumenstrom des zugeführten Prozesswassers wieder erhöht werden. In einer besonders einfachen Ausgestaltung ist dieser weitere vorbestimmte Grenzwert gleich dem Redox-Maximalwert. Damit ist gewährleistet, dass der Redox-Messwert immer in der Nähe des Redox-Maximalwertes liegt. Das bedeutet zudem, dass immer die maximal von den Denitrifikanten umzusetzende Stickstofffracht dem Reaktionsbehälter zugeführt wird, so dass möglichst viel der oxidierten Stickstoffverbindungen umgesetzt werden kann.

Natürlich ist es auch möglich, einen anderen Grenzwert vorzusehen, nach dessen Unterschreitung die Prozesswasserzuleitung wieder geöffnet bzw. der Volumenstrom des zugeführten Prozesswassers wieder erhöht wird. Alternativ ist es auch möglich, den Volumenstrom des zugeführten Prozesswassers beispielsweise für eine bestimmte Zeitspanne, die gegebenenfalls voreingestellt ist, zu vermindern und unabhängig vom ermittelten Redox-Messwert wieder zu erhöhen, nachdem die Zeitspanne abgelaufen ist.

In einer bevorzugten Ausgestaltung des Verfahrens wird der Volumenstrom des Elektronendonators vermindert, wenn der Redox-Messwert einen vorbestimmten Redox-Minimalwert unterschreitet. Dies kann beispielsweise dann passieren, wenn ein größerer Volumenstrom des Elektronendonators in den Reaktionsbehälter eingeleitet wird, als für die vollständige Reduktion der Stickstofffracht benötigt wird. In diesem Fall würde die gesamte zugeführte Stickstofffracht von den denitrifizierenden Mikroorganismen umgesetzt. Sofern diese weitere Umsetzungskapazitäten haben, werden mit dem überschüssigen Elektronendonator weitere Produkte reduziert. Dabei können beispielsweise Schwefelverbindungen reduziert werden, wodurch beispielsweise Schwefelwasserstoff freigesetzt werden könnte. Dies gilt es jedoch zu vermeiden. Durch die vollständige Reduktion der zugeführten Stickstofffracht sinkt das Redoxpotential ab und erreicht früher oder später den Redox-Minimalwert. Dies hat eine Verminderung des zugeführten Volumenstroms des Elektronendonators zur Folge, so dass der Volumenstrom des Elektronendonators nicht mehr ausreichend ist, neben der zugeführten Stickstofffracht weitere Produkte zu reduzieren.

Vorteilhafterweise wird der Volumenstrom des zugeführten Elektronendonators vermindert, wenn der pH-Messwert einen vorbestimmten pH-Minimialwert unterschreitet. Für den Fall, dass der dosierte Volumenstrom des Elektronendonators höher ist als die von den Denitrifikanten maximal umzusetzende Menge, findet, wie im oben genannten Beispiel, ebenfalls keine vollständige Reduktion der zugeführten Stickstofffracht statt, selbst für den Fall, dass der dosierte Volumenstrom des Elektronendonators für die zugeführte Stickstofffracht stöchiometrisch ausreichend ist. Da in diesem Fall der Elektronendonator im Überschuss vorliegt, sinkt der pH-Wert innerhalb des Reaktionsbehälters. Soweit der pH-Messwert den vorbestimmten pH-Minimialwert unterschreitet, wird die zugeführte Menge des Elektronendonators vermindert. So wird eine Übersäuerung des Systems vermieden, wodurch unter anderem erreicht wird, dass die Mikroorganismen, die für die Denitrifikation zuständig sind, sich immer in einem Milieu befinden, das für sie nicht schädigend ist.

In einer besonders einfachen Ausgestaltung des beschriebenen Verfahrens wird zum Vermindern des Volumenstroms des Elektronendonators die Elektronendonatorzuleitung vollständig geschlossen. Natürlich ist es auch möglich, den zugeführten Volumenstrom des Elektronendonators um einen bestimmten Anteil, beispielsweise die Hälfte, zu verringern. Der Volumenstrom des Elektronendonators kann wieder erhöht werden, sobald sich der Redox-Messwert oberhalb des Redox-Minimalwertes befindet und gleichzeitig der pH-Messwert oberhalb des pH-Minimalwertes liegt. Alternativ dazu können hier auch separate Grenzwerte vorgesehen werden, die um einen bestimmten Betrag von den genannten Minimalwerten entfernt liegen. Auch hier ist es denkbar, den Volumenstrom des zugeführten Elektronendonators für eine bestimmte Zeitspanne zu vermindern und nach Ablauf dieser Zeitspanne unabhängig von den gemessenen pH-Messwerten und Redox-Messwerten wieder zu erhöhen. Um ein unbeschadetes Überleben der Mikroorganismen gewährleisten zu können, ist es jedoch vorteilhaft, die Erhöhung des Volumenstroms des Elektronendonators von den genannten Messwerten abhängig zu machen.
Für den Fall, dass die zugeführte Stickstofffracht größer ist, als die von den Denitrifikanten maximal umzusetzende Menge an Stickstoff, findet ebenfalls keine vollständige Reduktion des Stickstoffs statt, selbst für den Fall, dass der dosierte Volumenstrom des Elektronendonators für die zugeführte Stickstofffracht stöchiometrisch ausreichend ist. In diesem Fall steigt zunächst das Redoxpotential innerhalb des Reaktionsbehälters im Zuge der nicht vollständigen Nitratreduktion an. Sobald der Redox-Messwert den Redox-Maximalwert überschreitet, wird der Volumenstrom des zugeführten Prozesswassers vermindert, so dass das Redoxpotential und damit auch der Redox-Messwert wieder absinken.

Da jedoch der Volumenstrom des zugeführten Elektronendonators unverändert bleibt, liegt nun der Elektronendonator im Überschuss vor, wodurch der pH-Wert sinkt. Sobald der pH-Messwert den pH-Minimalwert unterschreitet, wird auch der zugeführte Volumenstrom des Elektronendonators vermindert. Durch eine derartige Steuerung werden sowohl die zugeführte Stickstofffracht als auch der zugeführte Volumenstrom an Elektronendonator auf optimale Weise eingestellt, bis die zugeführte Stickstofffracht der maximal durch die Denitrifikanten abbaubaren Stickstoffmenge entspricht und gleichzeitig ein in optimaler Weise eingestellter Volumenstrom des Elektronendonators dem Reaktionsbehälter zugeführt wird.

Insbesondere bei Fischzuchtanlagen aber auch in anderen biologisch aktiven Systemen ist die in einem festen Volumenstrom des zugeführten Prozesswassers enthaltene tatsächliche Stickstofffracht betriebsbedingten Schwankungen unterworfen. Damit ist es möglich, dass trotz konstanten Prozesswasser-Volumenstroms unterschiedliche Mengen an oxidierten Stickstoffverbindungen in den Reaktionsbehälter eingeleitet werden, wodurch die oben beschriebenen Steuermechanismen greifen. Um auf derartige Veränderungen noch schneller reagieren zu können und die Denitrifikationsanlage näher an ihrer optimalen Auslastung zu betreiben, ist es vorteilhaft, wenn ein Zuleitungs-Redox-Messwert des in dem Prozesswasser herrschenden Redoxpotentials bestimmt wird und der zugeführte Volumenstrom des Elektonendonators in Abhängigkeit des Zuleitungs-Redox-Messwertes gesteuert wird. Eine noch bessere Einstellung der zugeführten Volumenströme kann erreicht werden, wenn zusätzlich zu dem Zuleitungs-Redox-Messwert ein Zuleitungs-pH-Messwert bestimmt wird, der ein Maß für den im Prozesswasser herrschenden pH-Wert ist. Auch dieser Zuleitungs-pH-Messwert kann zur Steuerung des zugeleiteten Volumenstroms des Elektronendonators verwendet werden. Damit werden die zugeführten Volumenströme an Prozesswasser und Elektronendonator nicht alleine über die entsprechenden Messwerte innerhalb des Reaktionsbehälters, sondern auch über die Messwerte innerhalb der Zuleitung des Prozesswassers bestimmt.

Vorzugsweise ist der Elektronendonator eine Säure, insbesondere eine organische Säure, bevorzugt Essigsäure oder Zitronensäure. Derartige Säuren oder säureenthaltende Stoffgemische mit anderen Kohlenwasserstoffverbindungen, die sauer reagieren, können gut als Elektronendonator und Kohlenstoffquelle eingesetzt werden. Da die Denitrifikation eine Anhebung des pH-Wertes im stöchiometrischen Endergebnis bewirkt, wird bei einem nahezu vollständigen Verbrauch des Elektronendonators einer gut arbeitenden Denitrifikationsanlage die Säurewirkung, also die Absenkung des pH-Wertes durch die Säure, mehr als kompensiert.

Eine erfindungsgemäße Denitrifikationsanlage weist einen Reaktionsbehälter, eine Prozesswasserzuleitung zum Leiten von Prozesswasser, das oxidierte Stickstoffverbindungen enthält, in den Reaktionsbehälter und eine Elektronendonatorzuleitung zum Leiten eines Elektronendonators in den Reaktionsbehälter auf und zeichnet sich dadurch aus, dass die Denitrifikationsanlage eine elektrische Steuerung aufweist, die zum Durchführen eines hier beschriebenen Verfahrens eingerichtet ist. Vorzugsweise ist dabei in der Prozesswasserzuleitung und/oder in der Elektronendonatorzuleitung wenigstens ein Ventil angeordnet, mit dem eine Durchflussmenge vorzugsweise stufenlos einstellbar ist. Auf diese Weise ist es besonders einfach möglich, auf ein Über- bzw. Unterschreiten von vorbestimmten Maximal- bzw. Minimalwerten durch die gemessenen Redox-Messwerte oder pH-Messwerte reagieren zu können.

Durch das hier beschriebene Verfahren kann selbst beim Anfahren einer derartigen Denitrifikationsanlage eine optimale Einstellung erreicht werden. Innerhalb dieser Startphase werden der pH-Messwert und der Redox-Messwert mit Systemparametern identisch sein. Insbesondere wird der Redox-Messwert oberhalb des Redox-Maximalwertes liegen. Beispielhaft kann als Redox-Maximalwert ein Wert von -150 mV angesetzt werden, während ein gängiger Redox-Messwert während der Startphase der Denitrifikationsanlage bei +100 mV liegt.

Daher ist in diesem Zustand die Prozesswasserzufuhr stark gedrosselt, wenn nicht sogar vollständig geschlossen. Es wird folglich lediglich ein Elektronendonator zugeführt. Aufgrund dessen wird im Reaktionsbehälter der pH-Messwert stark absinken, bis er den pH-Minimalwert erreicht. In diesem Fall wird auch die Dosierung des Elektronendonators vermindert oder sogar vollständig abgeschaltet. Unter diesen Randbedingungen wird das Redoxpotential innerhalb des Reaktionsbehälters aufgrund der langsam ablaufenden Nitratreduktion langsam fallen und die Aktivität der Denitrifikanten langsam aber stetig ansteigen. Sobald der Redox-Maximalwert, in diesem Fall von oben, passiert wird und der Redox-Messwert den Redox-Maximalwert erstmals unterschreitet, wird der zugeführte Volumenstrom des Prozesswassers erhöht. Gleichzeitig wird durch die Denitrifikation ein Teil des Elektronendonators umgewandelt, so dass der pH-Wert innerhalb des Reaktionsbehälters wieder ansteigt. Sobald der pH-Messwert den pH-Minimalwert überschreitet, wird auch der zugeführte Volumenstrom des Elektronendonators erhöht. Auf diese Weise wird sowohl der zugeführte Volumenstrom des Prozesswassers als auch der zugeführte Volumenstrom des Elektronendonators mit steigender Aktivität der Denitrifikanten erhöht, bis die Anlage ihre maximale Leistungsfähigkeit erreicht.

Mit Hilfe einer Zeichnung wird nachfolgend ein Ausführungsbeispiel der vorliegenden Erfindung näher erläutert. Es zeigt:
- Figur 1 -: die schematische Darstellung einer Denitrifikationsanlage gemäß einem ersten Ausführungsbeispiel der vorliegenden Erfindung und
- Figur 2 -: die schematische Darstellung einer Denitrifikationsanlage gemäß einem zweiten Ausführungsbeispiel der vorliegenden Erfindung.

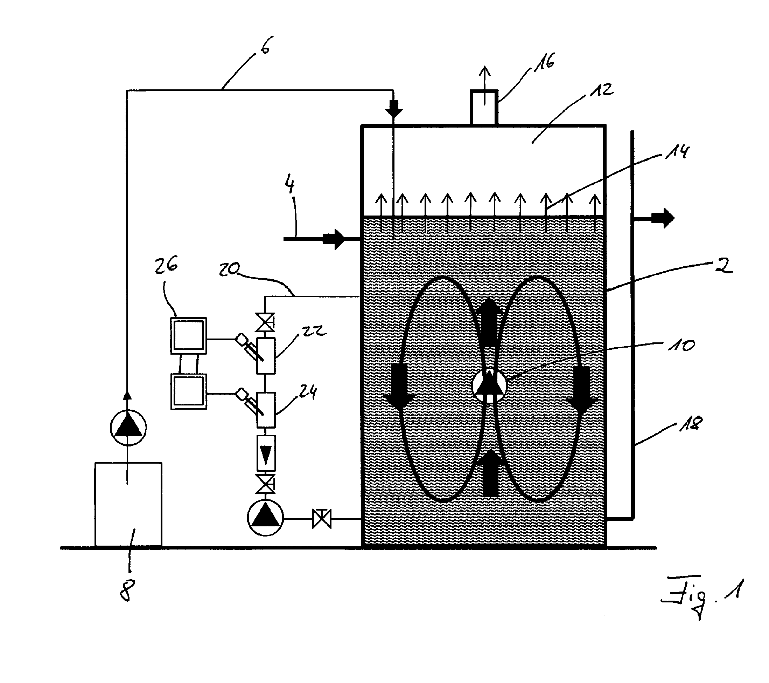

Figur 1 zeigt eine Denitrifikationsanlage, die über einen Reaktionsbehälter 2 verfügt, in den über eine Prozesswasserzuleitung 4 Prozesswasser, das oxidierten Stickstoff enthält, eingeleitet werden kann. Zudem kann über eine Elektronendonatorzuleitung 6 ein Elektronendonator, beispielsweise Essigsäure, aus einem Reservoir 8 zugeführt werden. Innerhalb des Reaktionsbehälters 2 wird das so entstandene Gemisch durch eine Umwälzpumpe 10 umgewälzt. Dies ist schematisch durch Pfeile und diese verbindende Linien dargestellt.

Durch die Denitrifikation der im Prozesswassers enthaltenen oxidierten Stickstoffverbindungen kommt es oberhalb des Gemischs zu einem Gaspolster 12, das insbesondere molekularen Stickstoff enthält, der, wie durch die Pfeile 14 angedeutet ist, aus dem Gemisch innerhalb des Reaktionsbehälters 2 entweicht. Über eine Abgasleitung 16 kann der Stickstoff beispielsweise an die Atmosphäre abgegeben werden.

Im unteren Bereich verfügt der Reaktionsbehälter 2 über einen Auslauf 18, durch den zumindest nahezu vollständig denitrifiziertes Prozesswasser den Reaktionsbehälter 2 verlässt und dem nachfolgenden System, beispielsweise einer Fischaufzuchtanlage, wieder zugeführt wird. Das Gemisch aus dem Reaktionsbehälter 2 wird durch eine separate Leitung 20 geleitet, in der eine erste Messeinrichtung 22 und eine zweite Messeinrichtung 24 angeordnet sind. Die erste Messeinrichtung 22 ist dabei für die Bestimmung des pH-Messwertes verantwortlich, während durch die zweite Messeinrichtung 24 ein Redox-Messwert bestimmt werden kann. Beide Messeinrichtungen 22, 24 sind mit einer elektrischen Steuerung 26 verbunden, die zur Durchführung des hier beschriebenen Verfahrens eingerichtet ist. So können die so bestimmten Redox-Messwerte und pH-Messwerte zur Steuerung der zugeführten Menge an Elektronendonator und Prozesswasser verwendet werden.

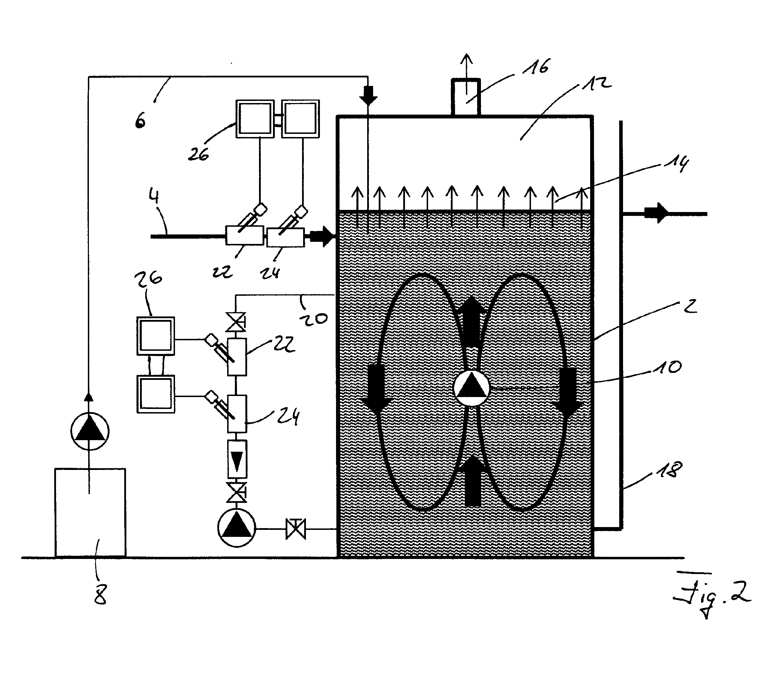

Figur 2 zeigt eine weitere Ausgestaltung einer Denitrifikationsanlage. Sie entspricht der in Figur 1 gezeigten Anlage, mit dem Unterschied, dass nun auch in der Prozesswasserzuleitung 4 eine erste Messeinrichtung 22 und eine zweite Messeinrichtung 24 angeordnet sind. Durch diese beiden Messeinrichtungen 22, 24 kann ein Zuleitungs-Redox-Messwert und ein Zuleitungs-pH-Messwert bestimmt werden. Auch diese beiden Messeinrichtungen 22, 24 sind mit einer elektrischen Steuerung 26 verbunden. Diese ist eingerichtet, aus den so bestimmten Zuleitungs-Messwerten und dem Redox-Messwert und dem pH-Messwert den zugeführten Volumenstrom an Elektronendonator und Prozesswasser möglichst genau zu bestimmen.

### Bezugszeichenliste

- 2 -: Reaktionsbehälter
- 4 -: Prozesswasserzuleitung
- 6 -: Elektronendonatorzuleitung
- 8 -: Reservoir
- 10 -: Umwälzpumpe
- 12 -: Gaspolster
- 14 -: Pfeil
- 16 -: Abgasleitung
- 18 -: Auslauf
- 20 -: Leitung
- 22 -: erste Messeinrichtung
- 24 -: zweite Messeinrichtung
- 26 -: elektrische Steuerung

## Patentansprüche

1. Verfahren zum Betreiben einer Denitrifikationsanlage, in der oxidierte Stickstoffverbindungen in Anwesenheit von Mikroorganismen reduziert werden und die
- einen Reaktionsbehälter (2),
- eine Prozesswasserzuleitung (4) zum Leiten von Prozesswasser, das oxidierte Stickstoffverbindungen enthält, in den Reaktionsbehälter (2),und
- eine Elektronendonatorzuleitung (6) zum Leiten eines Elektronendonators in den Reaktionsbehälter (2) aufweist,
wobei ein Redox-Messwert des in dem Reaktionsbehälter (2) herrschenden Redoxpotentials und ein pH-Messwert des in dem Reaktionsbehälter (2) herrschenden pH-Wertes bestimmt werden und ein Volumenstrom von Prozesswasser und/oder ein Volumenstrom von Elektronendonator, die in den Reaktionsbehälter (2) eingeleitet werden, in Abhängigkeit des Redox-Messwertes und des pH-Messwertes gesteuert werden.

2. Verfahren nach Anspruch 1, **dadurch gekennzeichnet, dass** der Volumenstrom des Prozesswassers vermindert wird, wenn der Redox-Messwert einen vorbestimmten Redox-Maximalwert überschreitet.

3. Verfahren nach Anspruch 2, **dadurch gekennzeichnet, dass** zum Vermindern des Volumenstroms des Prozesswassers die Prozesswasserzuleitung (4) geschlossen wird.

4. Verfahren nach Anspruch 1, 2 oder 3, **dadurch gekennzeichnet, dass** der Volumenstrom des Elektronendonators vermindert wird, wenn der Redox-Messwert einen vorbestimmten Redox-Minimalwert unterschreitet.

5. Verfahren nach einem der vorstehenden Ansprüche, **dadurch gekennzeichnet, dass** der Volumenstrom des Elektronendonators vermindert wird, wenn der pH-Messwert einen vorbestimmten pH-Minimialwert unterschreitet.

6. Verfahren nach Anspruch 4 oder 5, **dadurch gekennzeichnet, dass** zum Vermindern des Volumenstroms des Elektronendonators die Elektronendonatorzuleitung (6) geschlossen wird.

7. Verfahren nach einem der vorstehenden Ansprüche, **dadurch gekennzeichnet, dass** ein Zuleitungs-Redox-Messwert des in dem Prozesswasser herrschenden Redoxpotentials bestimmt wird und der Volumenstrom des Elektronendonators in Abhängigkeit des Zuleitungs-Redox-Messwertes gesteuert wird.

8. Verfahren nach einem der vorstehenden Ansprüche, **dadurch gekennzeichnet, dass** der Elektronendonator eine Säure, insbesondere eine organische Säure, bevorzugt Essigsäure oder Zitronensäure beinhaltet.

9. Denitrifikationsanlage mit einem Reaktionsbehälter (2), einer Prozesswasserzuleitung (4) zum Leiten von Prozesswasser, das oxidierte Stickstoffverbindungen enthält, in den Reaktionsbehälter (2) und einer Elektronendonatorzuleitung (6) zum Leiten eines Elektronendonators in den Reaktionsbehälter (2), **dadurch gekennzeichnet, dass** die Denitrifikationsanlage eine elektrische Steuerung (26) aufweist, die eingerichtet ist zum Durchführen eines Verfahrens nach einem der vorstehenden Ansprüche.

10. Denitrifikationsanlage nach Anspruch 9, **dadurch gekennzeichnet, dass** in der Prozesswasserzuleitung (4) und/oder in der Elektronendonatorzuleitung (6) wenigstens ein Ventil angeordnet ist, mit dem eine Durchflussmenge vorzugsweise stufenlos einstellbar ist.
